# EUROPEAN PATENT APPLICATION

(11) **EP 1 850 237 A1**
(43) Date of publication of application: **31.10.2007**
(21) Application number: 06008573.5
(22) Date of filing: 25.04.2006
(51) Int. Cl.: G06F 13/38, G06F 9/445

(54) **Portable device and method for setting a hardware identity code corresponding to the portable device**

(71) Applicant: Lite-On Technology Corporation, Neihu Dis Taipei 114 (TW)
(72) Inventor: Tsao, Tzu-Hao, Tai-Chung Hsien (TW)
(74) Representative: Görz, Ingo

(57) **Abstract**

A portable device (20) and a method for setting a hardware identity code corresponding to the portable device (20) are disclosed. The portable device (20) includes a first module (26) capable of performing a first function and corresponding to a first hardware identity code; a second module (28) capable of performing a second function and corresponding to a second hardware identity code; and a controller (22), coupled to the first and the second modules (26, 28), for controlling the first and the second modules (26, 28) to allow the portable device (20) to perform the first function or the second function according to a selecting signal, wherein if the controller (22) enables the first module (26), the controller (22) utilizes the first hardware identity code as a hardware identity code of the portable device (20), and if the controller (22) enables the second module (28), the controller (22) utilizes the second hardware identity code as the hardware identity code of the portable device (20).

## Description

The present invention relates to a method and related portable device for hardware identity according to the pre-characterizing clauses of claims 1 and 10.

A portable device, such as a PCMCIA (Personal Computer Memory Card International Association) card or a compact flash (CF) card, has a hardware identity code.

The related art portable device can support only a single hardware identity code because the product identity and the vendor identity of the related art portable device are unique and cannot be modified. For example, the related art portable device can contain a module such as a non-volatile memory (e.g., flash memory). The flash memory can provide a data storing function, however, a user cannot utilize the portable device as a portable storage device due to the aforementioned unique identity problem. Hence, even where the module of the portable device can provide other functions, the module cannot be utilized to provide said other functions.

This in mind, the present invention aims at providing a portable device and method to set a hardware identity code corresponding to the portable device.

This is achieved by a portable device and method according to claims 1 and 10. The dependent claims pertain to corresponding further developments and improvements.

As will be seen more clearly from the detailed description following below, the claimed portable device includes a switch and controller coupled to two modules.

For completeness, various aspects of the invention are described in the following numbered clauses:
1. A portable device, comprising:
   a first module capable of performing a first function and corresponding to a first hardware identity code;
   a second module capable of performing a second function and corresponding to a second hardware identity code; and
   a controller, coupled to the first and the second modules, for controlling the first and the second modules to allow the portable device to perform the first function or the second function according to a selecting signal, wherein if the controller enables the first module, the controller utilizes the first hardware identity code as a hardware identity code of the portable device, and if the controller enables the second module, the controller utilizes the second hardware identity code as the hardware identity code of the portable device.
2. The portable device of clause 1, further comprising:
   a switch, coupled to the controller, for determining enablement of the first module or the second module and generating the selecting signal.
3. The portable device of clause 1, wherein the first hardware identity code comprises at least a first product identity (PID) or a first vendor identity (VID).
4. The portable device of clause 3, wherein the second hardware identity code comprises at least a second product identity or a second vendor identity.
5. The portable device of clause 1, wherein the first module comprises the second module.
6. The portable device of clause 1, wherein if the first module is performing the first function and the selecting signal changes to indicate that the second module has been selected for enablement, the controller enables the second module and supplies power to the second module.
7. The portable device of clause 1, wherein the second module is a storage device, and the storage device stores at least a driver of the first module.
8. A method for setting a hardware identity code corresponding to a portable device, comprising:
   providing a first module of the portable device with a first hardware identity code, wherein the first module is capable of performing a first function;
   providing a second module of the portable device with a second hardware identity code, wherein the second module is capable of performing a second function; and
   controlling the first and second modules to allow the portable device to perform the first function or the second function according to a selecting signal, wherein the first hardware identity code is utilized as a hardware identity code of the portable device if the controller enables the first module, and the second hardware identity code is utilized as the hardware identity code of the portable device if the controller enables the second module.
9. The method of clause 8, further comprising:
   providing the portable device with a switch and utilizing the switch to enable the first module or the second module to generate the selecting signal.
10. The method of clause 8, wherein the first hardware identity code comprises at least a first product identity (PID) or a first vendor identity (VID).
11. The method of clause 10, wherein the second hardware identity code comprises at least a second product identity or a second vendor identity.
12. The method of clause 9, wherein the first module comprises the second module.
13. The method of clause 9, further comprising: enabling the second module and supplying power to the second module if the first module is performing the first function and the selecting signal changes to indicate that the second module has been selected for enablement.

In the following, the invention is further illustrated by way of example, taking reference to the accompanying drawings. Thereof
Fig. 1 is a functional block diagram of a portable device according to the present invention, and
Fig. 2 is a flowchart of setting the hardware identity code of the portable device shown in Fig. 1 according to the present invention.

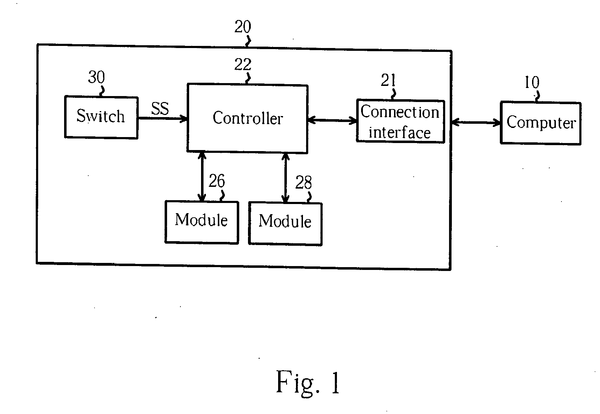

Please refer to Fig. 1. Fig. 1 is a functional block diagram of a portable device 20 according to the present invention. The portable device 20 comprises a connection interface 21, a controller 22, a plurality of modules 26 and 28, and a switch 30. The portable device 20 can establish a connection with a computer 10 through the connection interface 21. For example, the connection interface 21 is a USB (universal serial bus) plug that can be plugged into a USB port of the computer 10. The portable device 20 can then provide the computer 10 with new additionally functionality. Alternatively, the beneficiary of the connection interface 21 can be the user. Through the connection interface 21, a user can use the portable device 20 with the assistance provided by the computer 10.

The module 26 is capable of performing a first function and corresponds to a first hardware identity code. In the present embodiment, the first hardware identity code comprises a product identity (PID) PID1 and a vendor identity (VID) VID1. The module 28 is capable of performing the second function and corresponds to a second hardware identity code. In the present embodiment, the second hardware identity code comprises a product identity PID2 and a vendor identity VID2. In Fig. 1, the modules 26 and 28 are independent, but the present invention is not limited to mutually independent modules. The modules 26 and 28 can contain duplicate components or one of the modules 26 and 28 can share components with the other. Inasmuch as the first function is utilized, circuits and components in the modules 26 and 28 required by performing the first function will be activated/enabled first. On the other hand, if the second function is going to be activated, circuits and components in the modules 26 and 28 required when performing the second function will be activated/enabled first. An embodiment in which the module 26 comprises the module 28 is utilized for describing the operation of setting the hardware identity code of the portable device 20 according to the present invention.

It should be noted that the connection interface 21 could be any data transmission interface utilized for connecting with a system. For example, the portable device 20 can be a portable device (e.g., a wireless network card, a mouse, or an MP3 player) having a USB interface or having a PCMCIA interface. Additionally, in the present embodiment, the portable device 20 provides two functions, the above mentioned first and second functions. However, in other embodiments according to the present invention, the portable device 20 can provide more than two functions. In the present embodiment in which the metes and bounds of the present invention are not affected, the portable device 20 capable of providing only two functions is utilized for describing the operation of setting the hardware identity code of the portable device 20 according to the present invention. For convenience, assume that the portable device 20 is a USB wireless card, the module 26 is utilized for providing a wireless network communication as the first function, the module 26 comprises a transceiver and other components related to the communication function, and the module 28 utilized for the second function of storing data can be a flash memory or a non-volatile memory of other types. The first and second hardware identity codes are not limited to the above-mentioned product identities PID1, PID2, and vendor identities VID1, VID2. They can be other hardware identity codes. Please note that in the present embodiment, for the USB wireless network card (i.e., the portable device 20), the module 26 utilized for providing the first function (the wireless network communication function) substantially comprises the module 28 utilized for providing the second function (the data storing function). That is, when the portable device 20 according to the present invention activates the first function, the module 26 that comprises the module 28 is required to be enabled. However, when the portable device 20 activates the second function, only the module 28 is required to be enabled.

The controller 22, coupled to the modules 26, 28 and the switch 30, is utilized for executing a firmware to control the portable device 20. The user can determine to enable the module 26 or the module 28 by utilizing the switch 30 coupled to the controller 22. In the present invention, the switch 30 is a DIP (dual in-line package) switch. The switch 30 sends a selecting signal SS to communicate to the controller 22 which one of the first function or the second function the portable device 20 must perform. In other words, the controller 22 enables the module 26 or the module 28 according to the selecting signal SS. If the selecting signal SS shows that the module 26 is selected for enablement, the controller 22 utilizes the product identity PID1 and the vendor identity VID1 as the product identity and the vendor identity of the portable device 20. If the selecting signal SS shows that the module 28 is selected for enablement, the controller 22 utilizes the product identity PID2 and the vendor identity VID2 as the product identity and the vendor identity of the portable device 20. The related detailed description is provided in the following paragraphs. It should be noted that in the present embodiment, a user determines to enable the module 26 or the module 28 by utilizing the switch 30. The switch 30 then transmits the generated selecting signal SS to the controller 22. However, in other embodiments, the user can utilize other software or hardware means to implement the function provided by the switch 30, that is also covered in the scope of the present invention.

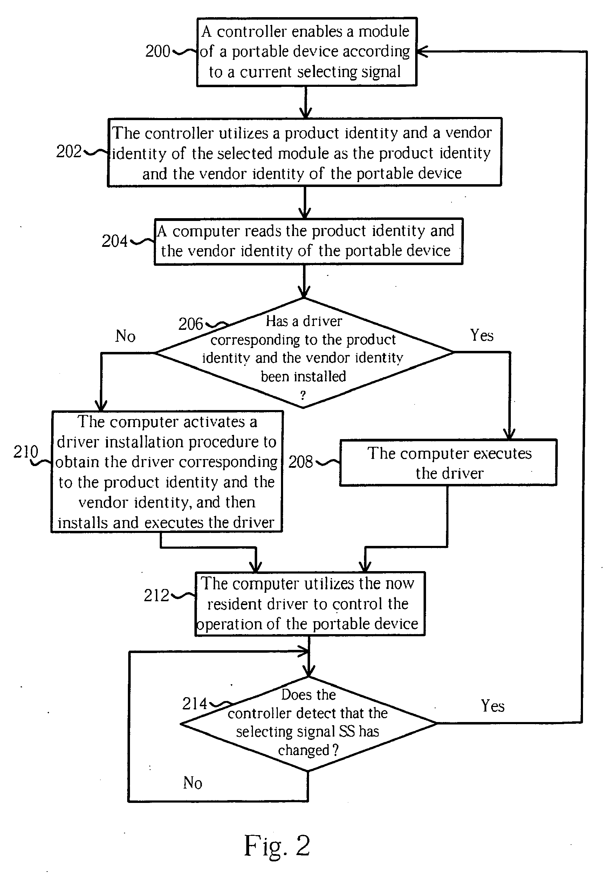

Please refer to Fig. 2. Fig. 2 is a flowchart of setting the hardware identity code of the portable device 20 according to the present invention. The operation of setting the hardware identity code of the portable device 20 comprises following steps:
- Step 200:: The controller 22 enables a module of the portable device 20 according to the current selecting signal SS.
- Step 202:: The controller 22 utilizes a product identity and a vendor identity of the selected module as the product identity and the vendor identity of the portable device 20.
- Step 204:: The computer 10 reads the product identity and the vendor identity of the portable device 20.
- Step 206:: The computer 10 determines if a driver corresponding to the product identity and the vendor identity has been installed; if so, proceed to step 208; otherwise, proceed to step 210.
- Step 208:: The computer 10 executes the driver; proceed to step 212.
- Step 210:: The computer 10 activates a driver installation procedure to obtain the driver corresponding to the product identity and the vendor identity, and then installs and executes the driver.
- Step 212:: The computer 10 utilizes the now resident driver to control the operation of the portable device 20.
- Step 214:: Does the controller 22 detect that the selecting signal SS has changed? If so, return to step 200; otherwise, continue to perform step 214.

The portable device 20, the USB wireless network card, has been plugged into a USB port of the computer 10. The portable device 20 is told which of the modules 26 28 will be enabled by the controller 22 according to the selecting signal SS transmitted by the switch 30. For example, if according to the selecting signal SS, the controller 22 is informed that the module 26 will be enabled to provide the wireless network communication function (i.e., the first function) (step 200), the controller 22 utilizes the product identity PID1 and the vendor identity VID1 corresponding to the module 26 as the product identity and the vendor identity of the portable device 20 (step 202). Next, the computer 10 detects the product identity and the vendor identity provided by the controller 22. These are respectively the product identity PID1 and the vendor identity VID1 (step 204). The computer 10 then determines if a driver DV1 corresponding to the product identity PID1 and the vendor identity VID1 has been installed (step 206). If so, the computer 10 directly executes the driver DV1 (step 208). If the driver DV1 is unavailable, the computer 10 can activate a driver installation procedure to obtain the driver DV1 corresponding to the product identity PID1 and the vendor identity VID1, and then install and execute the driver DV1 (step 210). At this time, the computer 10 considers the portable device 20 as a USB wireless network card. The computer 10 then utilizes the resident driver DV1 to control the operation of the portable device 20 (step 212).

If the controller 22 is informed according to the selecting signal SS that the module 28 will be enabled (step 200), as previously mentioned, the controller 22 utilizes the product identity PID2 and the vendor identity VID2 corresponding to the module 28 as the product identity and the vendor identity of the portable device 20 (step 202). Next, the computer 10 detects that the product identity and the vendor identity provided by the controller 22 are respectively the product identity PID2 and the vendor identity VID2 (step 204). The computer 1 0 then determines if a driver DV2 corresponding to the product identity PID2 and the vendor identity VID2 is available (step 206). If so, the computer 10 directly executes the driver DV2 (step 208). If the driver DV2 is unavailable, the computer 10 can activate a driver installation procedure to obtain the driver DV2 corresponding to the product identity PID2 and the vendor identity VID2, and then install and execute the driver DV2 (step 210). At this time, the computer 10 considers the portable device 20 as a portable storage device. The computer 10 then utilizes the resident driver DV2 to control the operation of the portable device 20 (step 212).

It should be noted that the computer 10 could retrieve the driver DV1 through the Internet or by accessing an external storage medium (e.g., an installation optical disc), or the operating system of the computer 10 may already contain the driver DV1. Therefore, the computer 10 can retrieve, install, and execute the driver DV1. In another embodiment, the driver DV1 has been previously stored in the module 28 (the flash memory) of the portable device 20. If a user requires the computer 10 to install the driver DV1 stored in the module 28, the switch 30 is utilized to enable the desired module 28, then the driver DV1 is retrieved from the module 28; the related detailed description is included in the following. In a condition in which the portable device 20 is utilized as a portable storage device for the computer 1 0, the driver DV2 of the portable storage device is frequently built-in to various operating systems available on the market. Hence, if the operating system of the computer 10 supports the portable storage device, there is no need for the computer 10 to retrieve the driver DV2 through the Internet or by accessing an exterior storage medium. The computer 10 can simply directly install and execute the driver D2 from the portable device 20.

The portable device 20 according to the present invention is capable of perceiving a switch in status of the active function by utilizing the switch 30. Assume that a user is using the portable device 20 that is currently performing a specific function. By using the above-mentioned function switch, the portable device 20 can be switched to provide another function. For example, the portable device 20 that is performing the first function can be switched to perform the second function, and vice versa. Assume that in the step 200, the selecting signal SS shows that the module 26 of the portable device 20 is enabled to perform the first function (the wireless network communication function). That is, currently the module 26 in the portable device 20 is providing the first function, and then the user can control the portable device 20 to switch to provide the second function by utilizing the switch 30. Meanwhile, the controller 22 detects that the selecting signal SS has been changed (step 214). The controller 22 then disables the module 26 and enables the module 28 instead (step 200). Next, the controller 22 replaces the product identity PID1 and the vendor identity VID1 (both corresponding to the module 26) with the product identity PID2 and the vendor identity VID2 (both corresponding to the module 28) as the product identity and the vendor identity of the portable device 20 (step 202). The computer 10 then detects the product identity PID2 and the vendor identity VID2 from the USB port (step 204). At this time, the computer 10 is informed that the wireless network communication module (the portable device 20) plugged in the USB port has been removed, and a portable storage device (the portable device 20) replaces the wireless network communication module to be plugged into the USB port. Afterwards, steps 204 through 212 are sequentially performed to control the portable device 20.

Furthermore, as previously mentioned, in a situation in which the controller 22 enables the module 26 according to the selecting signal SS to allow the portable device 20 to perform the first function (the wireless network communication function), if the computer 10 has not installed the driver DV1 corresponding to the module 26 and the driver DV1 of the module 26 is stored in the module 28, the user utilizes the switch 30 to generate a new selecting signal SS to enable the module 28. As mentioned above, the controller 22 then detects the selecting signal SS has changed (step 214). Next, the steps 200 through 212 are sequentially performed, whereby the computer 1 0 can retrieve the required driver DV1 from the module 28. Afterwards, the user utilizes the switch 30 to again generate a new selecting signal SS to enable the module 26, and then steps 200 through 212 are sequentially performed. In this way, the portable device 20 eventually performs the first function, and the computer 10 utilizes the resident driver DV1 to control the operation of the portable device 20.

It should be noted that in the present embodiment, the module 28 (the flash memory) providing the second function (the data storing function) is included within the module 26 providing the first function. Therefore, when the controller 22 enables the module 26 thereby providing power, the module 28 is necessarily supplied with power as well to allow the portable device 20 to perform the first function. However, in this condition, the portable device 20 does not provide the user with the second function. On the other hand, when the controller 22 enables the module 28 and provides the module 28 with power, the computer 10 views the module 28 as a portable storage device, and the circuits and components of the module 26 are not supplied with power except for module 28. In summary, to reduce power consumption in the present embodiment, the controller 22 in step 200 provides power only to the circuit components required by the selected function. Hence, when the selecting signal SS corresponds to the first function (the wireless network communication function), the controller 22 provides the module 26 (including the module 28) with power. However, when the selecting signal SS corresponds to the second function (the data storing function), the controller 22 only provides the module 28 in the module 26 with power.

As previously mentioned, the manufacturer of the portable device 20 stores into the module 28 the driver (driver DV1) and related software programs required for operating the portable device 20. The remaining storage space of the module 28 is provided for the user to store data. When the portable device 20 provides the user with the second function by way of utilizing the switch 30, the user can utilize the portable device 20 as a portable storage device. In other words, the user can store data into the module 28 and access the module 28 to retrieve the data. The user also can determine to install or not to install the driver DV1 stored in the module 28. The driver DV1 is utilized for operating the module 26 to allow the portable device 20 to perform the first function. When the manufacturer develops the portable device 20 and the associated firmware, a design concern may include a storage space arrangement of the module 28. This can include deciding how much space to reserve for storing the driver DV1 and the related software programs. An option is to allow the user to decide whether the driver DV1 stored in the module 28 will be installed or not, and another option to set the driver DV1 and the related software programs to be protected from being removed or modified. For the design concern, the above-mentioned storage space arrangement and settings regarding protection of data can be designed as user controlled preferences. In regard to updating the driver DV1 and the related software programs, if they are set to be protected, it is necessary to utilize an updating program provided by the manufacturer to update or modify the driver DV1 and the related software programs with assistance provided by the firmware.

In contrast to the related art portable device, in addition to providing the user with the original function, the present invention portable device can utilize its own hardware components to provide additional functions. For example, a memory unit of the portable device can be utilized for providing the user with a data storing function; that means the user can store personal data in the memory unit. The two (or more) functions provided by the portable device are provided by different modules; each has its own hardware identity code. In this way, when the portable device performs a specific function, the hardware identity code of the portable device is set to be the hardware identity code of the module that provides the specific function. In addition, various software or hardware means can be implemented for switching between two (or more) functions. For example, a switch can be installed in the portable device for this purpose. In addition, as previously mentioned, the portable device capable of providing a data storing function can be utilized as a portable storage device. The portable device manufacturer can also store the driver (e.g., the above-mentioned driver DV1) of the portable device and the related software programs in the same memory that provides the data storing function, whereas the remaining space is available to the user for storing data. In this way, the user can install the driver of the portable device in any computer to control the operation of the portable device, without preparing an installation optical disc or an update program.

## Claims

1. A portable device (20), comprising:
a first module (26) capable of performing a first function and corresponding to a first hardware identity code;
a second module (28) capable of performing a second function and corresponding to a second hardware identity code; and
**characterized by**:
a controller (22), coupled to the first and the second modules (22, 28), for controlling the first and the second modules (26, 28) to allow the portable device (20) to perform the first function or the second function according to a selecting signal, wherein if the controller (22) enables the first module (26), the controller (22) utilizes the first hardware identity code as a hardware identity code of the portable device (20), and if the controller (22) enables the second module (28), the controller (22) utilizes the second hardware identity code as the hardware identity code of the portable device (20).

2. The portable device (20) of claim 1, **characterized by**:
a switch (30), coupled to the controller (22), for determining enablement of the first module (26) or the second module (28) and generating the selecting signal.

3. The portable device (20) of claim 1, **characterized in that** the first hardware identity code comprises at least a first product identity (PID) or a first vendor identity (VID).

4. The portable device (20) of claim 3, **characterized in that** the second hardware identity code comprises at least a second product identity or a second vendor identity.

5. The portable device (20) of claim 1, **characterized in that** the first module (26) comprises the second module (28).

6. The portable device (20) of claim 1, **characterized in that** if the first module (26) is performing the first function and the selecting signal changes to indicate that the second module (28) has been selected for enablement, the controller (22) enables the second module (28) and supplies power to the second module (28).

7. The portable device (20) of claim 1, **characterized in that** the second module (28) is a storage device, and the storage device stores at least a driver of the first module (26).

8. A method for setting a hardware identity code corresponding to a portable device (20), comprising:
providing a first module (26) of the portable device (20) with a first hardware identity code, wherein the first module (26) is capable of performing a first function;
providing a second module (28) of the portable device (20) with a second hardware identity code, wherein the second module (28) is capable of performing a second function; and
**characterized by**:
controlling the first and second modules (26, 28) to allow the portable device (20) to perform the first function or the second function according to a selecting signal, wherein the first hardware identity code is utilized as a hardware identity code of the portable device (20) if the controller (22) enables the first module (26), and the second hardware identity code is utilized as the hardware identity code of the portable device (20) if the controller (22) enables the second module (28).

9. The method of claim 8, **characterized by**:
providing the portable device (20) with a switch (30) and utilizing the switch (30) to enable the first module (26) or the second module (28) to generate the selecting signal.

10. The method of claim 8, **characterized in that** the first hardware identity code comprises at least a first product identity (PID) or a first vendor identity (VID).

11. The method of claim 10, **characterized in that** the second hardware identity code comprises at least a second product identity or a second vendor identity.

12. The method of claim 9, **characterized in that** the first module (26) comprises the second module (28).

13. The method of claim 9, **characterized by**: enabling the second module (28) and supplying power to the second module (28) if the first module (26) is performing the first function and the selecting signal changes to indicate that the second module (28) has been selected for enablement.

## Amended claims

### Amended claims in accordance with Rule 86(2) EPC.

**1.** A portable device (20), comprising:
a first module (26) capable of performing a first function and corresponding to a first hardware identity code;
a second module (28) capable of performing a second function and corresponding to a second hardware identity code; and
a controller (22), coupled to the first and the second modules (22, 28), for controlling the first and the second modules (26, 28) to allow the portable device (20) to perform the first function or the second function according to a selecting signal, wherein if the controller (22) enables the first module (26), the controller (22) utilizes the first hardware identity code as a hardware identity code of the portable device (20), and if the controller (22) enables the second module (28), the controller (22) utilizes the second hardware identity code as the hardware identity code of the portable device (20),
a switch (30), coupled to the controller (22), for determining enablement of the first module (26) or the second module (28) and generating the selecting signal,
**characterized in that** if the first module (26) is performing the first function and the selecting signal changes to indicate that the second module (28) has been selected for enablement, the controller (22) enables the second module (28) and supplies power to the second module (28).

**2.** The portable device (20) of claim 1, **characterized in that** the first hardware identity code comprises at least a first product identity (PID) or a first vendor identity (VID).

**3.** The portable device (20) of claim 2, **characterized in that** the second hardware identity code comprises at least a second product identity or a second vendor identity.

**4.** The portable device (20) of claim 1, **characterized in that** the first module (26) comprises the second module (28).

**5.** The portable device (20) of claim 1, **characterized in that** the second module (28) is a storage device, and the storage device stores at least a driver of the first module (26).

**6.** A method for setting a hardware identity code corresponding to a portable device (20), comprising:
providing a first module (26) of the portable device (20) with a first hardware identity code, wherein the first module (26) is capable of performing a first function;
providing a second module (28) of the portable device (20) with a second hardware identity code, wherein the second module (28) is capable of performing a second function;
the method comprising the steps:
controlling the first and second modules (26, 28) to allow the portable device (20) to perform the first function or the second function according to a selecting signal, wherein the first hardware identity code is utilized as a hardware identity code of the portable device (20) if the controller (22) enables the first module (26), and the second hardware identity code is utilized as the hardware identity code of the portable device (20) if the controller (22) enables the second module (28), and
providing the portable device (20) with a switch (30) and utilizing the switch (30) to enable the first module (26) or the second module (28) to generate the selecting signal,
**characterized by**: enabling the second module (28) and supplying power to the second module (28) if the first module (26) is performing the first function and the selecting signal changes to indicate that the second module (28) has been selected for enablement.

**7.** The method of claim 6, **characterized in that** the first hardware identity code comprises at least a first product identity (PID) or a first vendor identity (VID).

**8.** The method of claim 7, **characterized in that** the second hardware identity code comprises at least a second product identity or a second vendor identity.

**9.** The method of claim 6, **characterized in that** the first module (26) comprises the second module (28).
